# EUROPEAN PATENT SPECIFICATION

(11) **EP 0 622 421 B1**
(45) Date of publication and mention of the grant of the patent: **27.10.1999**
(21) Application number: 94303124.5
(22) Date of filing: 28.04.1994
(51) Int. Cl.: C08L 83/07, C08K 9/06, C08K 3/36

(54) **Liquid injection moldable silicone compositions**
Flüssig, spritzgiessbare Silikonzusammensetzung
Composition de silicone liquide moulable par injection

(30) Priority: 30.04.1993 US 54475
(43) Date of publication of application: 02.11.1994
(73) Proprietor: GENERAL ELECTRIC COMPANY, Schenectady, NY 12345 (US)
(72) Inventor: Zumbrum, Michael Allen, Clifton Park, New York 12065 (US); Jeram, Edward Matthew, Burnt Hills, New York 12027 (US)
(74) Representative: Szary, Anne Catherine, Dr.

(56) References cited:
- EP-A- 0 091 737
- EP-A- 0 489 391
- EP-A- 0 489 518
- CA-A- 1 309 533

## Description

### Background of the Invention

The present invention relates to a heat curable platinum catalyzed liquid injection moldable (LIM) silicone composition having improved flow characteristics. More particularly, the present invention relates to the employment of fumed silica aggregate having an average convex perimeter in the range of up to 0.6 µm (microns) and the use of such material in combination with platinum catalyzed heat curable liquid silicones.

Prior to the present invention as shown by Jeram, U.S. patents 3,884,866 and 3,957,713, high strength addition cured silicone compositions were provided which were liquid injection moldable. These silicone compositions comprise a first vinyl containing silicone component containing a high viscosity vinyl end-stopped organopolysiloxane, a low viscosity vinyl containing organopolysiloxane, filler and a platinum catalyst. Cure of the vinyl containing silicone component is effected by mixing with a second silicon hydride component in the form of a silane or silicon hydride siloxane. Additional silicone (LIM) compositions are shown by Lee et al, U.S. patent 4,162,243 and Sweet, U.S. patent 4,427,801.

Although elastomers can be made from the aforedescribed silicone LIM compositions having a satisfactory strength, elongation and tear, the employment of fumed silica treated with organo silicon compounds, such as hexamethyldisilazane often result in the formation of silicone LIM compositions which do not have optimum flow characteristics in the uncured state.

As used hereinafter, the expression "flow rate", "infusion rate", or "application rate" means the number of grams/min of extrudate flow under pressure. A typical flow test involves measuring the time required to force 1-10 grams from a 170g (6 oz.) Semco of test material through a 3.175 mm (1/8") diameter orifice after the application of 621 kPa (90 psi) pressure.

Improved application rates of liquid injection moldable silicone compositions can be obtained when silicone LIM compositions are reinforced with hydrophobic silicon dioxide prepared by the method of Kratel et al, U.S. patent 3,953,487. In Kratel et al, hydrophobic silicon dioxide is made by treating silicon dioxide having a surface area of 50 m²/g to 600 m²/g with an organosilicon compound, such as trimethylethoxysilane in water, while simultaneously subjecting the resulting treated filler to ball milling. A treated silicon dioxide product is obtained which has a reduced average convex perimeter as compared to commercially available silicon dioxide, such as fumed silica. The term "convex perimeter" is used to define the magnitude of the silica aggregate which consists of aggregated primary particles of silicon dioxide. The convex perimeter is determined by measuring the average circumferential distance from high point to high point around the aggregate. Improved flow characteristics have been achieved by the employment of fumed silica made in accordance with the employment of fumed silica made in accordance with the Kratel et al method by ball milling the filler. The Kratel et al process however, is cumbersome and environmentally unattractive, since it necessarily must be practiced under batch conditions in a large kettle, and thereafter heated to 250°C to dispel volatile organosilane.

As shown in copending application, EP-A-0 622 334 it has been found that fumed silica can be made having an average convex perimeter in the range of about 0,12 µm (micron) to about 0.6 µm (micron) which does not require ball milling under batch conditions. Unlike the ball milling procedure of Kratel et al, there is used an oxygen containing silane or organosilane mixture having a predefined range of organosilane, oxygen, and optionally hydrogen, where the oxygen can be used in elemental form, or as a mixture of oxygen and a substantially inert gas. The mixture is burned in a combustion chamber. A flame temperature is achieved which when calculated adiabatically is in the range of from about 1400°C to 2000°C.

### Summary of the Invention

The present invention is based on the discovery that fumed silica made in accordance with the method of EP-A-0 622 334 hereinafter referred to as "fumed silica aggregate" can be combined with heat curable silicone materials, such as a high viscosity vinyl end-stopped organopolysiloxane, a low viscosity vinyl containing organopolysiloxane, a platinum catalyst and a silicon hydride siloxane to produce a silicone LIM composition having an improved flow rate under extrusion conditions. It also has been found that the in-situ treatment of the fumed silica aggregate with an organosilicon material, such as an organosilazane, and preferably hexamethyldisilazane optionally in the presence of water can be effected by incrementally adding the fumed silica aggregate and the organosilazane material to a silicone component of the LIM composition, such as the high viscosity vinyl end-stopped organopolysiloxane followed by the stripping of the mixture of volatiles. After completion of the in-situ treatment of the fumed silica aggregate, the resulting silicone mixture can be combined with the other LIM materials.

In particular instances where an improved LIM flow rate is found using fumed silica aggregate, a reduction in physical properties is sometimes experienced. A possible explanation is that the surface area of the fumed silica aggregate is outside the preferred range of 125-500 m²/g. In order to minimize the production of silicone LIM compositions having reduced physicals, fumed silica aggregate can be used made from the method of EP-A-0 622 334 using a flame temperature calculated adiabatically in the range of 1600°C to 1900°C.

### Statement of the Invention

There is provided by the present invention, a heat curable extrudable silicone composition having improved flow properties comprising by weight,
(A) 100 parts of a vinyl containing organopolysiloxane comprising,
   (i) 70 to 98 parts of a linear polydiorganosiloxane having terminal vinyl diorganosiloxy units with vinyl radicals attached to silicon by carbon-silicon bonds and a viscosity of 10 000 to 500 000 mPa.s (centipoise) at 25°C, no more than 35 mole % of siloxy units having phenyl radicals attached to silicon,
   (ii) 1 to 15 parts of a polydiorganosiloxane having at least one terminal siloxy unit with vinyl attached to silicon by carbon-silicon bonds, from 0.01 mole % to 60 mole % of siloxy units with vinyl attached to silicon by carbon-silicon bonds, from 0 to 25 mole % of siloxy units with phenyl radicals attached to silicon by carbon-silicon bonds and a viscosity of from 50 to 5,000 mPa.s (centipoise) at 25°C, and
   (iii) 1 to 15 parts of an organopolysiloxane having 0.1 to 25 mole % of organosiloxy units with vinyl attached to silicon by carbon-silicon bonds, from 0 to about 25 mole % of siloxy units having phenyl radicals attached to silicon by carbon-silicon bonds and a viscosity of 50 to 5,000 mPa.s (centipoise) at 25°C and,
(B) from 5 to 70 parts of a fumed silica aggregate having a surface area in the range of 75-500 m²/g, and an average convex perimeter in the range of 0.12 µm (micron) to 0.60 µm (micron), obtainable by feeding into a combustion chamber, a gaseous combustible mixture comprising a silicon compound selected from the group consisting of a silane, organosilane, or mixture thereof, and sufficient oxygen to produce a flame having a calculated adiabatic flame temperature in the range of 1,400°C to 2,000°C, where the gaseous combustible mixture, comprises from 0.05 to 2.5 mole % of the silicon compound based on the total moles in the combustible mixture of the silicon compound and elements in a mixture selected from the group consisting of,
   (i) a mixture of oxygen and hydrogen, and
   (ii) a mixture of oxygen, hydrogen, and nitrogen,
(C) from 0.1 to 10 parts of a silicon hydride selected from the group consisting of silanes and organopolysiloxanes, and
(D) an effective amount of a platinum group metal hydrosilylation catalyst.

The linear high viscosity vinyl end-stopped organopolysiloxane, A (i), of the present invention has from 0 to 35 mole percent of phenyl siloxy units and a viscosity of from 10,000 to 500,000 mPa.s (centipoise) at 25°C. These high viscosity organopolysiloxanes may be represented by the general formula: 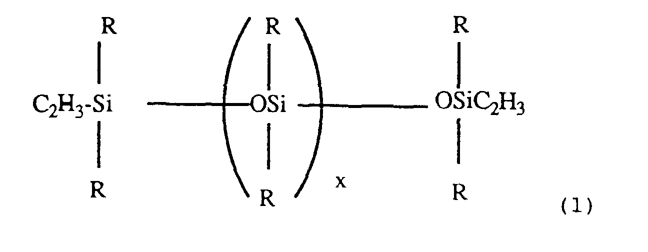 where R is selected from the group consisting of monovalent hydrocarbon radicals and halogenated monovalent hydrocarbon radicals having from 1 to 20 carbon atoms, and x is an integer having a value of from 100 to 10,000, and preferably from 500 to 2,000. Additional high viscosity vinyl end-stopped organopolysiloxanes are disclosed in U.S. Pat. No. 3,884,866, which is incorporated hereby by reference.

The low viscosity organopolysiloxane, A (ii), of the present invention has at least one terminal vinyl group per molecule, a vinyl content that can vary from 0.01 mole percent to 60 mole percent of vinyl siloxy units and, preferably .05 to 10 mole percent of vinyl siloxy units; it can have a viscosity that can vary from 50 to 5,000 mPa.s (centipoise) at 25°C, and preferably from 50 to 1,000 mPa.s (centipoise) at 25°C; it can have from 0 to 25 mole percent phenyl radicals. These low viscosity organopolysiloxanes can be represented by the formula: 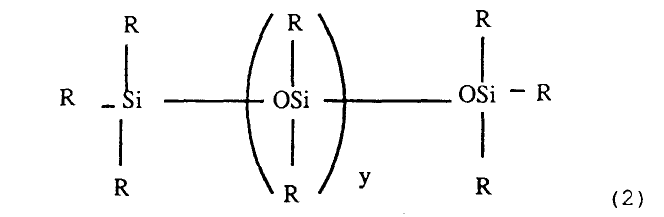 where R is defined above, and at least one terminal R radical is a vinyl radical, and y is an integer equal to 1 to 750. Some of these low viscosity organopolysiloxanes are shown in U.S. Pat. No. 3,884,866, which is incorporated herein by reference.

The vinyl on chain organopolysiloxane, A (iii), of the present invention has from 0.1 to 25 mole percent of vinyl siloxy units, and preferably from 0.2 to 5 mole percent of vinyl siloxy units, a viscosity that varies from 50 to 5,000 mPa.s (centipoise) at 25°C, and 0 to 25 mole percent of phenyl siloxy units. These vinyl on chain organopolysiloxanes can be characterized as copolymers of alkenyl siloxy units having the formula:

Rₐ R² _{b} SiO_{(4-a-b)/2} (3)

where R is defined above, R² is a C₍₁₋₂₀₎ straight or branched chain alkenyl radical attached to silicon by a C-Si linkage, and preferably has 1 to 12 carbon atoms, a and b have a value of from 0 to 2, inclusive, and the sum of a and b is equal to from 0.8 to 3.0, inclusive; and organosiloxy units having the structural formula:

R_{c} Si O_{(4-c)/2} (4)

where R is defined above and c has a value of from 0.8 to 2.5, inclusive. R² can be selected from, allyl, methallyl, butenyl, pentenyl, ethenyl, and is preferably vinyl. The copolymer generally contains from 0.5 to 99.5 mole percent of the units of formula 3 and 0.5 to 99.5 mole percent of the units of formula 4. These copolymers are shown in U.S. Pat. No. 3,344,111, Chalk, and U.S. Pat. No. 3,436,366, Modic, which are incorporated herein by reference.

The preferred vinyl on chain organopolysiloxanes are linear and have the general formula; 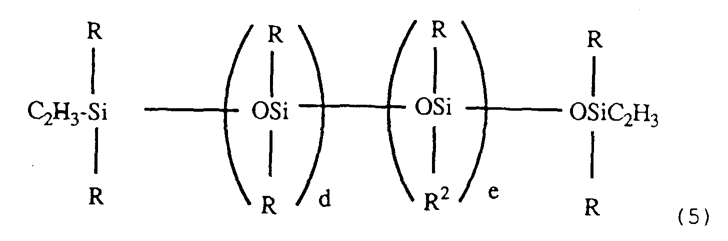 where R and R² are defined above, and d and e are positive integers, so that the polymer can contain up to 20 mole percent R² siloxy units. Preferably, R² is vinyl, and the polymer can contain from 0.05 to 10 mole percent of R² siloxy units, and the viscosity can range from 300 to 1000 mPa.s (centipoise) at 25°C.

R in formulas 1-6 can be selected from the group consisting of phenyl, tolyl, xylyl, and naphthyl; halogenated aryl radicals such as, chlorophenyl, and chloronaphthyl; aralkyl radicals such as, benzyl, phenylethyl; alkyl radicals having from 1 to 8 carbon atoms such as, methyl, ethyl, propyl, butyl, pentyl, hexyl, and octyl; alkenyl radicals having from 2 to 8 carbon atoms such as, vinyl, allyl and 1-propenyl; halogenated alkyl radicals having from 1 to 8 carbon atoms such as, chloropropyl, trifluoropropyl; and cycloalkyl radicals such as, cyclobutyl, cyclopentyl and cyclohexyl. Preferably, R is methyl, ethyl, phenyl or trifluoropropyl.

The silicone hydride component of the present invention serves as a crosslinking agent and may be selected from the class consisting of hydrogen containing silanes and hydrogen containing organopolysiloxanes, where the latter is preferred. The hydrogen containing organopolysiloxanes of the present invention can be characterized as copolymers having at least one siloxy unit per molecule having the formula:

R³ _{f} H_{g} SiO_{(4-f-g)/2} (6)

where R³ is a C₍₁₋₈₎ monovalent hydrocarbon radical free of aliphatic unsaturation; f has a value of from 0 to 2, inclusive; g has a value of 1 to 3 inclusive, and the sum of f and g is equal to from 1 to 3 inclusive. The viscosity of the hydrogen containing organopolysiloxane should range from 5 to 1000 and preferably from 5 to 100 mPa.s (centipoise) at 25°C.

Included with the hydrogen containing organopolysiloxane described above are MQ resins having units, such as H(R)₂ SiO_{1/2} and SiO₂. Also included are hydrogen MQ resins substituted having condensed diorganosiloxy units and monoorganosiloxy units. These copolymer generally contains from 0.5 to 99.5 mole percent of the units of formula 6 and from 0.5 to 99.5 mole percent of the units of formula 4.

The preferred silicon hydride siloxane is a linear organopolysiloxane polymer of the formula: 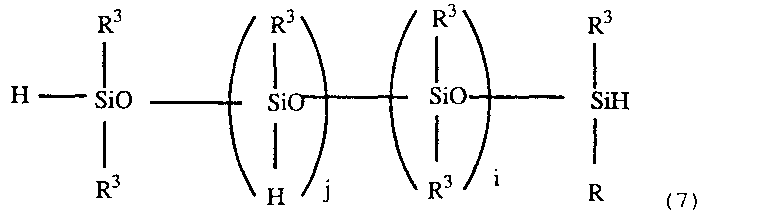 wherein R and R³ are defined above, j can vary from 1 to 1000, and i can vary from 5 to 200. More preferably, j can vary from 10 to 500 and i can vary from 5 to 200.

Preferrably component (c) is a silicone hydride methylpolysiloxane.

The silicon hydride siloxane is utilized at a concentration of anywhere from about 0.5 to 25 parts by weight and preferably 0.5 to 10 parts by weight per 100 parts by weight vinyl containing organopolysiloxane. There can be at least one hydrogen siloxy unit per vinyl siloxy unit and preferably an average of from 1.0 to 1.75 hydrogen siloxy units, per vinyl siloxy unit in the silicone LIM composition.

Many types of platinum catalysts for this SiH olefin addition reaction are known and such platinum catalysts may be used also for the reaction of the present case. The preferred platinum catalysts especially when optical clarity is required are those platinum compound catalysts which are soluble in the present reaction mixture. The platinum compound can be selected from those having the formula (PtCl₂Olefin)₂ and H(PtCl₃Olefin) as described in U.S. Pat. No. 3,159,601, Ashby. The olefin shown in the previous two formulas can be almost any type of olefin but is preferably an alkene having from 2 to 8 carbon atoms, a cycloalkene having from 5 to 7 carbon atoms or styrene. Specific olefins utilizable in the above formulas are ethylene, propylene, the various isomers of butylene, octylene, cyclopentene, cyclohexene, cycloheptene, etc.

Another platinum catalyst useful in the practice of the present invention is a platinum chloride cyclopropane complex (PtCl₂C₃H₆)₂ described in U.S. Pat. No. 3,159,662, Ashby.

A platinum containing catalyst also can be used in the form of a complex formed from chloroplatinic acid with up to 2 moles, per gram of platinum of a member selected from the class consisting of alcohols, ethers, aldehydes and mixtures thereof as shown in U.S. Pat. No. 3,220,972, Lamoreaux.

The preferred platinum catalyst also can be used as a flame retardant additive. It is disclosed in French Pat. No. 1,548,775, Karstedt. It can be made by reacting chloroplatinic acid containing 4 moles of water of hydration and tetravinylcyclotetrasiloxane in the presence of sodium bicarbonate in an ethanol solution.

Fumed silica aggregate having a substantially reduced convex perimeter used in the practice of the invention can be formed from primary particles of fumed silicon dioxide. The primary particles of fumed silicon dioxide can be made by burning an organosilane mixture as set forth in the statement of the invention. It has also been found desirable to calcine the aggregate after it has been formed. A calcining temperature in the range of 400°C to 600°C can be used to substantially eliminate by products, such as residual HCl.

Organosilanes which can be used to make the fumed silica aggregate are for example, SiCl₄, CH₃SiCl₃, CH₃SiHCl₂, HSiCl₃, (CH₃)₂SiCl₂, and (CH₃)₃SiCl, (CH₃)₃SiH, (CH₃)₂SiH₂ and CH₃SiH₃. In addition, silanes and halosilanes can be used, such as SiCl₄, HSiCl₃ and SiH₄.

In order that those skilled in the art will be better able to practice the present invention, the following example is given in the way of illustration and not by way of limitation. All parts are by weight and unless indicated otherwise.

### Example 1

There was added 3 parts of water to 70% by weight of a dimethylvinyl terminated polydimethylsiloxane having a viscosity of 40,000 mPa.s (centipoise) at 25°C, the resulting mixture was compounded for 15 minutes. There was then added 25 parts of fumed silica aggregate having an average convex perimeter in the range of 0.38 µm (micron). The fumed silica aggregate was added portion-wise in 1/3 increments along with hexamethyldisilazane; it was mixed for 30 minutes after each addition. The in-situ treatment of the fumed silica aggregate was completed by mixing the batch for two hours at 70-90°C. Volatiles, such as hexamethyldisiloxane and ammonia were removed over a two hour period at 145°C under vacuum.

The flow rate and mole % composition of the feed used in making the fumed silica aggregate are shown as follows, where "Mtri" is methyltrichlorosilane:

| | Mtri | H₂ | O₂ | N₂ |
|---|---|---|---|---|
| Flow Rate (g/min) | 1.000 | 0.402 | 4.497 | 14.803 |
| Mole Percent | 0.76% | 22.99% | 16.03% | 60.311% |

The fumed silica aggregate was prepared by the following procedure:

A mixture of air, which had been preheated to approximately 55°C, hydrogen and methyltrichlorosilane was fed into a downward-directed burner having a 3.18 mm diameter. All gas flow rates were monitored and controlled with MKS flow meters of the MKS Instrument Incorp., Andover, Mass. The liquid chlorosilane feed was monitored with a micromotion flow meter calibrated for the low end of its 0-50 g/min span. An annulus guard flame was maintained by feeding hydrogen in a concentric ring around the inner burner tube. Quench air was introduced approximately 20 cm upstream of the burner tip. The combustion products were contained inside a 4.08 cm (ID) Hastelloy reactor vessel and conveyed by a jet ejector vacuum system down stream of the reactor. The jet ejector also acted as a HCl scrubber. For sampling purposes, a vessel containing a sintered metal filter (3.5 cm diameter x 30 cm in length) which also acted as an HCl scrubber was placed in-line between the reactor and the jet ejector. The filter accumulated fumed silica and allowed the by product gases to pass through. The sample was then scraped from the filter element and calcined in a separate oven at 500°C under air to produce sample (A). Analysis showed that the sample contained surface impurities of 150 ppm of Fe, 80 ppm of Ni and 10 ppm of Mn.

The remaining 30 % by weight of the above dimethylvinyl siloxane polymer was added to the batch along with cooling to 80°C. There was then added to the mixture, 4 parts of a low viscosity vinyl containing polydimethylsiloxane having a viscosity of 500 mPa.s (centipoise) at 25°C and chain-stopped with a trimethylsiloxy unit and a dimethylvinylsiloxy unit, 4 parts of a vinyl containing polydimethylsiloxane having a viscosity of 500 mPa.s (centipoise) at 25°C which had approximately 1.65 weight % vinyl groups attached to silicon by carbon-silicon linkages and consisted essentially of dimethylsiloxy units, methylvinylsiloxy units and terminated with dimethylvinylsiloxy units. In addition, there was added one part of a mold release agent in the form of a silanol containing MQ resin; the resulting mixture was blended for 10 minutes after each addition. There was then added, 20 ppm of platinum in the form of a platinum complex shown by Karstedt, French patent 1548775. The resulting formulation was designated Part A.

A silicone part B formulation was prepared by mixing 96.7 parts of the above polymethylsiloxane/filler base with 3.3 parts of a silicon hydride cross-linker consisting essentially of a resin of condensed dimethylhydrogensiloxy units, and tetrasiloxy units blended with a hydrogen containing polydimethylsiloxane consisting essentially of condensed dimethylsiloxy units and methylhydrogensiloxy units and chain terminated with dimethylhydrogensiloxy units. The silicon hydride cross-linker and polymethylsiloxane/filler base was blended with 0.2 part of 1-ethynyl-1-cyclohexanol for 10 minutes. The resulting silicon hydride siloxane formulation was designated part B. The respective A and B mixtures were then filtered through screen packs.

A liquid injection moldable silicone composition was prepared by mixing 100 parts of Part A with 100 parts of Part B. After 5 minutes, the resulting liquid injection moldable silicone was placed in a 170g (6 ounce) Semco cartridge. A pressure of 621 kPa (90 psi) was applied to the mixture forcing it through an 3.175 mm (1/8") diameter orifice to measure its flow rate. It had a flow rate of 300 g/per minute.

The above procedure was repeated, except that in place of the fumed silica aggregate having a convex perimeter in the range of 0.38 µm (micron), liquid injection moldable silicone compositions were prepared utilizing the same part A and part B mixtures in the same weight proportions, except that the fumed silica aggregate was replaced with commercially available silazane treated fumed silica having an aggregate convex perimeter of 0.34 µm (microns) and 0.58 µm (microns) respectively. The fumed silica aggregate having a convex perimeter of 0.58 µm (micron) was made in accordance with Lee, U.S. Pat 4,048,290. The fumed silica aggregate having a convex perimeter of 0.34 µm (microns) was made in accordance with Kratel et al, U.S. patent 3,953,487.

The morphological characteristics and physical properties of the resulting materials were then evaluated.

It was found that the LIM composition containing the silazane treated fumed silica made by the method of Kratel et al had a flow rate of 230 g/min, while the LIM composition having the silazane treated fumed silica made by the method of Lee had a flow rate of 70 g/min. Although a flow of 300 g/min was obtained with the silicone LIM composition containing the fumed silica aggregate in-situ treated with silazane in accordance with the invention, its physical properties were 35 Shore A, 4140 kPa (600 Tensile (psi)) 440 elongation (%) and 1071 kg/m (60 Tear (lb/in)). These properties were in many instances substantially less than the physical properties of the LIM's using the commercially available fumed silicas. A possible explanation is that the surface area of the fumed silica aggregate used in making the LIM composition of the present invention was 132 m²/g, and was on the low side of the 125 m²/g - 500 m²/g range required for optimum physical properties and was also lower than the 200-400 m²/g used in the Lee method.

Although the above example is directed to only a few of the very many variables which can be employed in the making the heat curable extrudable silicone compositions of the present invention, it should be understood that the present invention is directed to a much broader variety of liquid injection moldable silicone compositions set forth in the description preceding this example.

## Claims

1. A heat curable extrudable silicone composition having improved flow properties comprising by weight,
(A) 100 parts of a vinyl containing organopolysiloxane comprising,
(i) 70 to 98 parts of a linear polydiorganosiloxane having terminal vinyl diorganosiloxy units with vinyl radicals attached to silicon by carbon-silicon bonds and a viscosity of 10,000 to 500,000 mPa.s (centipoise) at 25°C, no more than 35 mole % of siloxy units having phenyl radicals attached to silicon,
(ii) 1 to 15 parts of a polydiorganosiloxane having at least one terminal siloxy unit with vinyl attached to silicon by carbon-silicon bonds, from 0.01 mole % to 60 mole % of siloxy units with vinyl attached to silicon by carbon-silicon bonds, from 0 to 25 mole % of siloxy units with phenyl radicals attached to silicon by carbon-silicon bonds and a viscosity of from 50 to 5,000 mPa.s (centipoise) at 25°C, and
(iii) 1 to 15 parts of an organopolysiloxane having about 0.1 to 25 mole % of organosiloxy units with vinyl attached to silicon by carbon-silicon bonds, from 0 to 25 mole % of siloxy units having phenyl radicals attached to silicon by carbon-silicon bonds and a viscosity of 50 to 5,000 mPa.S (centipoise) at 25°C wherein said organopolysiloxane is a copolymer of alkenyl siloxy units having the formula:
RₐR² _{b}SiO_{(4-a-b)/2}
and organosiloxy units having the formula:
R_{c}SiO_{(4-c)/2}
where R is selected from the group consisting of monovalent hydrocarbon radicals and halogenated monovalent hydrocarbon radicals having from 1 to 20 - carbon atoms, R² is a C₍₁₋₂₀₎ straight or branched chain alkenyl radical attached to silicon by a C-Si linkage, a and b have a value of from 0 to 2, the sum of a and b is equal to from 0.8 to 3.0, and c has a value of 0.8 to 2.5, and
(B) from about 5 to about 70 parts of a fumed silica aggregate having a surface area in the range of 75-500 m²/g, and an average convex perimeter in the range of 0.12 µm (micron) to 0.60 µm (micron), obtainable by feeding into a combustion chamber, a gaseous combustible mixture comprising a silicon compound selected from the group consisting of a silane, organosilane, or mixture thereof, and sufficient oxygen to produce a flame having a calculated adiabatic flame temperature in the range of 1,400°C to 2,000°C, where the gaseous combustible mixture, comprises from 0.05 to 2.5 mole % of the silicon compound based on the total moles in the combustible mixture of the silicon compound and elements in a mixture selected from the group consisting of,
(i) a mixture of oxygen and hydrogen, and
(ii) a mixture of oxygen, hydrogen, and nitrogen,
(C) from about 0.1 to 10 parts of a silicon hydride selected from the group consisting of silanes and organopolysiloxanes, and
(D) an effective amount of a platinum group metal hydrosilylation catalyst.

2. A heat curable extrudable silicone composition in accordance with claim 1, where the vinyl containing organopolysiloxane (A) is a vinyl containing polydimethylsiloxane.

3. A heat curable extrudable silicone composition in accordance with claim 1, where the silicon hydride component (C) is a silicone hydride methylpolysiloxane.

4. A heat curable extrudable silicone composition in accordance with claim 1, where the fumed silica aggregate is treated with an organo silazane.

5. A heat curable extrudable silicone composition in accordance with claim 1, where the fumed silica aggregate is treated with hexamethyldisilazane in situ.

6. A heat curable extrudate silicone composition in accordance with claim 1, where the fumed silica aggregate has a surface area in the range of 125 m²/g to 500 m²/g.

7. A heat curable extrudate silicone composition in accordance with claim 1, where the fumed silica aggregate is formed at a temperature in the range of 1600°C to 1900°C calculated adiabatically.

## Patentansprüche

1. Hitzehärtbare extrudierbare Silicon-Zusammensetzung mit verbesserten Fließeigenschaften, umfassend, bezogen auf das Gewicht,
(A) 100 Teile eines vinylhaltigen Polyorganosiloxans, umfassend
(i) 70 bis 98 Teile eines linearen Polydiorganosiloxans mit endständigen Vinyldiorganosiloxy-Einheinten, bei denen Vinylreste über Kohlenstoff-Silicium-Bindungen an Silicium gelunden sind, und mit einer Viskosität von 10.000 bis 500.000 mPa·s (centipoise) bei 25°C, wobei nicht mehr als 35 Mol-% der Siloxy Einheiten an Silicium gebundene Phenylreste aufweisen,
(ii) 1 bis 15 Teile eines Polydiorganosiloxans mit mindestens einer endständigen Siloxy-Einheit, bei der Vinyl durch Kohlenstoff-Silicium-Bindungen an Silicium gebunden ist, von 0,01 Mol-% bis 60 Mol-% der Siloxy-Einheiten mit durch Kohlenstoff-Silicium-Bindungen an Silicium gebundenem Vinyl, von 0 bis 25 Mol-% von Siloxy-Einheiten mit durch Kohlenstoff-Silicium-Bindungen an Silicium gebundenen Phenylresten, und mit einer Viskosität von 50 bis 5.000 mPa·s (centipoise) bei 25°C und
(iii) 1 bis 15 Teile eines Polyorganosiloxans mit etwa 0,1 bis 25 Mol.% von Organosiloxy-Einheiten mit durch Kohlenstoff-Silicium-Bindungen an Silicium gebundenem Vinyl, von 0 bis 25 Mol-% von Siloxy-Einheiten mit durch Kohlenstoff-Silicium-Bindungen an Silicium gebundenen Phenylresten, und mit einer Viskosität von 50 bis 5.000 mPa s (centipoise) bei 25°C, worin das Polyorganosiloxan ein Copolymer von Alkenylsiloxy-Einheiten der Formel:
RₐR² _{b}SiO_{(4-a-b)/2}
und Organosiloxy-Einheiten der Formel:
R_{c}SiO_{(4-c)/2}
ist, worin R ausgewählt ist aus der Gruppe bestehend aus einwertigen Kohlenwasserstoffresten und halogenierten einwertigen Kohlenwasserstoffresten mit 1 bis 20 Kohlenstoffatomen, R² ein geradkettiger oder verzweigter C₁₋₂₀-Alkenylrest ist, der durch eine C-Si-Bindung an Silicium gebunden ist, a und b einen Wert von 0 bis 2 haben, die Summe von a und b gleich 0,8 bis 3,0 ist, und c einen Wert von 0,8 bis 2,5 hat, und
(B) von etwa 5 bis etwa 70 Teilen eines pyrogenen Siliciumdioxid-Aggregats mit einer Oberfläche im Bereich von 75-500 m²/g und einem mittleren konvexen Umfang im Bereich von 0,12 µm bis 0,60 µm, erhältlich durch Zuführen einer gasförmigen brennbaren Mischung, umfassend eine Siliciumverbindung, ausgewählt aus der Gruppe bestehend aus einem Silan, Organosilan oder einer Mischung davon, und genügend Sauerstoff zur Erzeugung einer Flamme mit einer errechneten adiabatischen Flammentemperatur im Bereich von 1.400°C bis 2.000°C, in eine Verbrennungskammer, worin die gasförmige brennbare Mischung von 0,05 bis 2,5 Mol-% der Siliciumverbindung, bezogen auf die Gesamtmole in der brennbaren Mischung aus der Siliciumverbindung und Elementen in einer Mischung umfaßt, ausgewählt aus der Gruppe bestehend aus
(i) einer Mischung aus Sauerstoff und Wasserstoff und
(ii) einer Mischung aus Sauerstoff, Wasserstoff und Stickstoff,
(C) von 0,1 bis 10 Teile eines Siliciumhydrids, ausgewählt aus der Gruppe bestehend aus Silanen und Polyorganosiloxanen und
(D) eine wirksame Menge eines Hydrosilylierungs-Katalysators aus einem Platingruppenmetall.

2. Hitzehärtbare extrudierbare Silicon-Zusammensetzung nach Anspruch 1, worin das vinylhaltige Polyorganosiloxan (A) ein vinylhaltiges Polydimethylsiloxan ist.

3. Hitzehärtbare extrudierbare Silicon-Zusammensetzung nach Anspruch 1, worin die Siliciumhydrid-Komponente (C) ein Siliconhydridmethylpolysiloxan ist.

4. Hitzehärtbare extrudierbare Silicon-Zusammensetzung nach Anspruch 1, worin das pyrogene Siliciumdioxid-Aggregat mit einem Organosilazan behandelt ist.

5. Hitzehärtbare extrudierbare Silicon-Zusammensetzung nach Anspruch 1, worin das pyrogene Siliciumdioxid-Aggregat mit Hexamethyldisilazan in situ behandelt ist.

6. Hitzehärtbare extrudierbare Silicon-Zusammensetzung nach Anspruch 1, worin das pyrogene Siliciumdioxid-Aggregat eine Oberfläche im Bereich von 125 m²/g bis 500 m²/g aufweist.

7. Hitzehärtbare extrudierbare Silicon-Zusammensetzung nach Anspruch 1, worin das pyrogene Siliciumdioxid-Aggregat bei einer adiabatisch errechneten Temperatur im Bereich von 1.600°C bis 1.900°C gebildet ist.

## Revendications

1. Composition de silicone extrudable thermodurcissable présentant des propriétés d'écoulement améliorées, comprenant en poids :
(A) 100 parties d'un vinylorganopolysiloxane, qui comprend :
(i) de 70 à 98 parties d'un polydiorganosiloxane linéaire présentant des motifs terminaux vinyldiorganosiloxy, les groupes vinyle étant fixés sur un atome de silicium par une liaison carbone-silicium, une viscosité allant de 10 000 à 500 000 mPa.s (centipoise) à 25 °C, et pas plus de 35 % en moles de motifs siloxy présentant des groupes phényle fixés sur l'atome de silicium,
(ii) de 1 à 15 parties d'un polydiorganosiloxane présentant au moins un motif siloxy terminal avec un groupe vinyle fixé sur l'atome de silicium par une liaison carbone-silicium, de 0,01 à 60 % en moles de motifs siloxy avec un groupe vinyle fixé sur l'atome de silicium par des liaisons carbone-silicium, de 0 à 25 % en moles de motifs siloxy dont les groupes phényle sont fixés sur les atomes de silicium par des liaisons carbone-silicium, et une viscosité allant de 50 à 5 000 mPa.s (centipoise) à 25 °C, et
(iii) de 1 à 15 parties d'un organopolysiloxane présentant d'environ 0,1 à 25 % en moles de motifs organosiloxy avec un groupe vinyle fixé sur l'atome de silicium par une liaison carbone-silicium, de 0 à 25 % en mole de motifs siloxy dont les groupes phényle sont fixés sur les atomes de silicium par des liaisons carbone-silicium, et une viscosité de 50 à 5 000 mPa.s (centipoise) à 25 °C, ledit organopolysiloxane étant un copolymère qui comporte des motifs alcénylsiloxy répondant à la formule :
RₐR² _{b}SiO_{(4-a-b)/2}
et des motifs organosiloxy répondant à la formule :
R_{c}SiO_{(4-c)/2}
dans lesquelles R est choisi dans l'ensemble constitué de groupes hydrocarbonés monovalents et de groupes hydrocarbonés halogénés monovalents comportant de 1 à 20 atomes de carbone, R² représente un groupe alcényle à chaîne droite ou ramifiée en C₁₋₂₀ fixé sur l'atome de silicium par une liaison C-Si, a et b ont une valeur allant de 0 à 2, la somme de a et b est égale à une valeur de 0,8 à 3,0, et c a une valeur de 0,8 à 2,5, et
(B) d'environ 5 à environ 70 parties d'un agrégat de silice fumée présentant une surface spécifique qui se situe dans l'intervalle allant de 75 à 500 m²/g et un périmètre convexe moyen qui se situe dans l'intervalle allant de 0,12 µm à 0,60 µm, pouvant être obtenu par introduction dans une chambre de combustion, d'un mélange combustible gazeux qui comprend un composé de silicium choisi dans l'ensemble constitué par un silane, un organosilane ou leurs mélanges, et suffisamment d'oxygène pour produire une flamme présentant une température de flamme, calculée en supposant des conditions adiabatiques, qui se situe dans l'intervalle allant de 1 400 °C à 2 000 °C, le mélange combustible gazeux comprenant de 0,05 à 2,5 % en moles de composé de silicium par rapport au nombre de moles total présent dans le mélange combustible du composé de silicium et d'éléments d'un mélange choisi dans l'ensemble constitué de :
(i) un mélange d'oxygène et d'hydrogène, et
(ii) un mélange d'oxygène, d'hydrogène et d'azote,
(C) d'environ 0,1 à 10 parties d'un hydrure de silicium choisi dans l'ensemble constitué de silanes et d'organopolysiloxanes, et
(D) une quantité efficace d'un catalyseur d'hydrosilylation au métal appartenant au groupe du platine.

2. Composition de silicone extrudable thermodurcissable selon la revendication 1, dans laquelle le vinylorganopolysiloxane (A) est un vinylpolydiméthylsiloxane.

3. Composition de silicone extrudable thermodurcissable selon la revendication 1, dans laquelle le composant (C) hydrure de silicium est un hydrogénométhylpolysiloxane.

4. Composition de silicone extrudable thermodurcissable selon la revendication 1, dans laquelle l'agrégat de silice fumée est traité avec un organosilazane.

5. Composition de silicone extrudable thermodurcissable selon la revendication 1, dans laquelle l'agrégat de silice fumée est traité in *situ* avec l'hexaméthyldisilazane.

6. Composition de silicone extrudable thermodurcissable selon la revendication 1, dans laquelle l'agrégat de silice fumée présente une surface spécifique qui se situe dans l'intervalle allant de 125 m²/g à 500 m²/g.

7. Composition de silicone extrudable thermodurcissable selon la revendication 1, dans laquelle l'agrégat de silice fumée est formé à une température se situant dans l'intervalle allant de 1600 °C à 1900°C, calculée en supposant des conditions adiabatiques.
